# EUROPEAN PATENT APPLICATION

(11) **EP 4 521 216 A1**
(43) Date of publication of application: **12.03.2025**
(21) Application number: 23823178.1
(22) Date of filing: 14.06.2023
(51) Int. Cl.: G06F 3/0481

(54) **FILE SELECTION METHOD AND APPARATUS, ELECTRONIC DEVICE, AND READABLE STORAGE MEDIUM**

(30) Priority: 17.06.2022 CN 202210692614
(71) Applicant: Vivo Mobile Communication Co., Ltd., Dongguan, Guangdong 523863 (CN)
(72) Inventor: LI, Yanyan, Dongguan, Guangdong 523863 (CN)
(74) Representative: Murgitroyd & Company
(86) International application number: PCT/CN2023/100129
(87) International publication number: WO 2023/241612

(57) **Abstract**

This application discloses a file selection method and apparatus (700), and a readable storage medium, and pertains to the field of communication technologies. The method includes: in a case that a file selection control is displayed, receiving (201) a first input performed by a user on the file selection control; displaying (202) a file selection interface (31) corresponding to the file selection control in response to the first input; in a case that the file selection interface (31) includes a target file group identifier indicating a target file group, selecting (203) a first target file in the target file group in response to a second input on the target file group identifier; and in a case that the file selection interface (31) includes at least two files, selecting (204) a second target file in the at least two files in response to a third input.

## Description

### CROSS-REFERENCE TO RELATED APPLICATION

This application claims priority to Chinese Patent Application No. 202210692614.5, filed in China on June 17, 2022, which is incorporated herein by reference in its entirety.

### TECHNICAL FIELD

This application pertains to the field of communication technologies, and specifically relates to a file selection method and apparatus, an electronic device, and a readable storage medium.

### BACKGROUND

With popularization of electronic devices, users generally store various files such as pictures, videos, and documents in the electronic devices.

In the related art, an electronic device generally stores many files. If a user wants to view or share a plurality of files with a friend in batches, the user usually needs to successively select these files from many files, that is, the user needs to select one file at a time and perform a plurality of selection operations until all files that need to be selected are selected, and therefore the user cannot conveniently and quickly select required files from many files. For example, a graphics library of the user generally stores many files such as pictures and videos. When the user needs to select a plurality of pictures in batches, the user needs to select one picture at a time and perform a plurality of selection operations until all pictures that need to be selected are selected, and therefore the user cannot quickly and conveniently select required pictures from massive picture resources.

Consequently, steps of a file selection process are cumbersome and time-consuming.

### SUMMARY

Embodiments of this application provide a file selection method and apparatus, an electronic device, and a readable storage medium, to resolve a problem that steps of a file selection process are cumbersome and time-consuming.

According to a first aspect, an embodiment of this application provides a file selection method. The method includes: in a case that a file selection control is displayed, receiving a first input performed by a user on the file selection control; displaying a file selection interface corresponding to the file selection control in response to the first input; in a case that the file selection interface includes a target file group identifier, selecting a first target file in response to a second input performed by the user on the target file group identifier, where the target file group identifier is used to indicate a target file group, and the target file group includes the first target file; and in a case that the file selection interface includes at least two files, selecting a second target file in response to a third input performed by the user, where the at least two files include the second target file.

According to a second aspect, an embodiment of this application provides a file selection apparatus. The apparatus includes a receiving module, a display module, and an execution module. The receiving module is configured to: in a case that a file selection control is displayed, receive a first input performed by a user on the file selection control. The display module is configured to display a file selection interface corresponding to the file selection control in response to the first input received by the receiving module. The execution module is configured to: in a case that the file selection interface includes a target file group identifier, select a first target file in response to a second input performed by the user on the target file group identifier, where the target file group identifier is used to indicate a target file group, and the target file group includes the first target file. The execution module is configured to: in a case that the file selection interface includes at least two files, select a second target file in response to a third input performed by the user, where the at least two files include the second target file.

According to a third aspect, an embodiment of this application provides an electronic device. The electronic device includes a processor and a memory, the memory stores a program or an instruction executable on the processor, and the program or the instruction is executed by the processor to implement the steps of the method according to the first aspect.

According to a fourth aspect, an embodiment of this application provides a readable storage medium. The readable storage medium stores a program or an instruction, and the program or the instruction is executed by a processor to implement the steps of the method according to the first aspect.

According to a fifth aspect, an embodiment of this application provides a chip. The chip includes a processor and a communication interface, the communication interface is coupled to the processor, and the processor is configured to run a program or an instruction to implement the method according to the first aspect.

According to a sixth aspect, an embodiment of this application provides a computer program product. The program product is stored in a storage medium, and the program product is executed by at least one processor to implement the method according to the first aspect.

According to the embodiments of this application, in a case that a file selection control is displayed, a first input performed by a user on the file selection control is received; a file selection interface indicated by the file selection control is displayed; in a case that the file selection interface includes a target file group identifier, a first target file is selected in response to a second input performed by the user on the target file group identifier, where the target file group identifier is used to indicate a target file group, and the target file group includes the first target file; and in a case that the file selection interface includes at least two files, a second target file is selected in response to a third input performed by the user, where the at least two files include the second target file. In this method, the corresponding file selection interface is displayed based on the first input performed by the user; in a case that the file selection interface includes the target file group identifier, the first target file in the target file group is selected based on the second input performed by the user; and in a case that the file selection interface includes at least two files, the second target file in the at least two files is selected based on the third input performed by the user, so that the user can quickly select a plurality of required files in the file selection interface based on an actual requirement of the user, thereby improving flexibility of file selection.

### BRIEF DESCRIPTION OF DRAWINGS

FIG. 1 is a flowchart of a file selection method according to an embodiment of this application;
FIG. 2(a) is a first schematic diagram of an interface to which a file selection method is applied according to an embodiment of this application;
FIG. 2(b) is a second schematic diagram of an interface to which a file selection method is applied according to an embodiment of this application;
FIG. 3(a) is a third schematic diagram of an interface to which a file selection method is applied according to an embodiment of this application;
FIG. 3(b) is a fourth schematic diagram of an interface to which a file selection method is applied according to an embodiment of this application;
FIG. 3(c) is a fifth schematic diagram of an interface to which a file selection method is applied according to an embodiment of this application;
FIG. 4 is a sixth schematic diagram of an interface to which a file selection method is applied according to an embodiment of this application;
FIG. 5 is a seventh schematic diagram of an interface to which a file selection method is applied according to an embodiment of this application;
FIG. 6 is an eighth schematic diagram of an interface to which a file selection method is applied according to an embodiment of this application;
FIG. 7 is a schematic structural diagram of a file selection apparatus according to an embodiment of this application;
FIG. 8 is a schematic structural diagram of an interface of an electronic device according to an embodiment of this application; and
FIG. 9 is a schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

With reference to the accompanying drawings, the following describes in detail a file selection method provided in the embodiments of this application by using specific embodiments and application scenarios thereof.

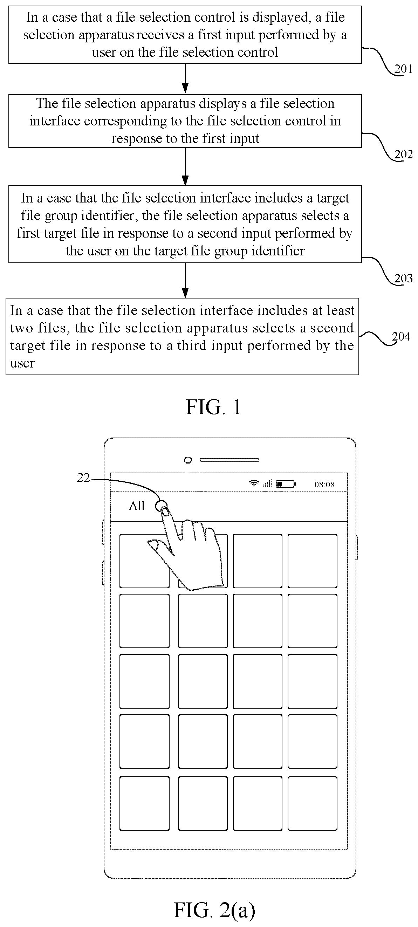

An embodiment of this application provides a file selection method. FIG. 1 is a flowchart of a file selection method according to an embodiment of this application. As shown in FIG. 1, the file selection method provided in this embodiment of this application may include the following steps 201 to 204.

Step 201: In a case that a file selection control is displayed, a file selection apparatus receives a first input performed by a user on the file selection control.

In this embodiment of this application, the file selection control includes at least one file selection control, one file selection control indicates one file selection mode, and different file selection modes correspond to different file selection interfaces. For example, in a case that at least one file selection control is displayed, the file selection apparatus receives a first input performed by a user on one of the file selection controls, and displays a file selection interface corresponding to the one file selection control.

For example, the file selection control may include at least one of the following: a group selection control, a row selection control, a column selection control, and a region selection control. For example, the group selection control corresponds to a group selection interface, the row selection control corresponds to a row selection interface, the column selection control corresponds to a column selection interface, and the region selection control corresponds to a region selection interface.

Optionally, in this embodiment of this application, the file selection control may be a function option, a function button, an operation option, or the like. This is not limited in this embodiment of this application.

Optionally, in this embodiment of this application, the file selection mode may include a group selection mode, a row selection mode, a column selection mode, and a region selection mode.

Optionally, in this embodiment of this application, the file selection apparatus receives a touch input performed by the user on a control on a file preview interface, and displays the file selection control on the file preview interface.

Optionally, the file preview interface may be an application interface of a graphics library application, or may be an application interface of a file management application. This is not limited in this embodiment of this application.

Optionally, the file preview interface includes at least one file. Optionally, the at least one file may be a picture, an audio file, a video file, a text file, or the like.

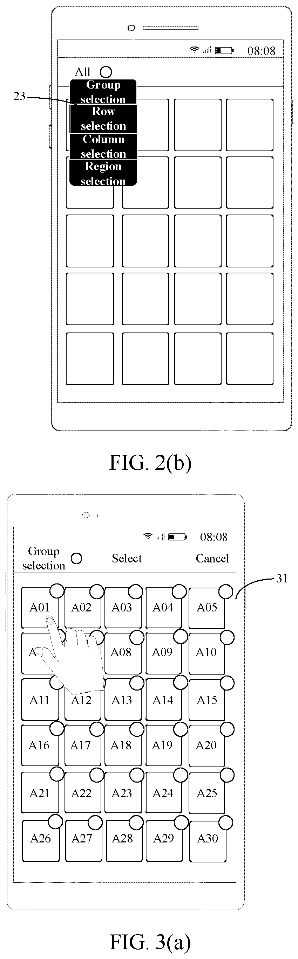

For example, FIG. 2(a) and FIG. 2(b) are schematic diagrams of interfaces of a file selection method according to an embodiment of this application. As shown in FIG. 2(a), for example, a file preview interface is a graphics library interface. A plurality of pictures, a character flag "All", and a control 22 corresponding to the character flag "All" are displayed on a graphics library interface 21. After a user taps the control 22, as shown in FIG. 2(b), a pull-down menu 23 is displayed, where the pull-down menu includes four operation options: "Group selection", "Row selection", "Column selection", and "Region selection". The user may tap any one of the options to enter a corresponding file selection mode.

In this embodiment of this application, the first input may be a touch input, a voice input, a gesture input, or another feasible input performed by the user on the file selection control, which is not limited in this embodiment of this application. For example, the first input is a tap input, a slide input, or a press input performed by the user. Further, the foregoing tap operation may be any quantity of times of tap operations. The foregoing slide operation may be a slide operation in any direction, such as upward slide, downward slide, left slide, or right slide, which is not limited in this embodiment of this application.

Step 202: The file selection apparatus displays a file selection interface corresponding to the file selection control in response to the first input.

In this embodiment of this application, the file selection interface includes at least one file group identifier or at least one file.

In this embodiment of this application, one file group identifier is used to indicate one file group, and one file group corresponds to one file group identifier.

Optionally, in this embodiment of this application, the file group identifier may be a picture, a character, or the like.

Optionally, in this embodiment of this application, one file group may include a predetermined quantity of files, or include at least one file of a same type, or include at least one file whose storage time is within a preset time interval, or include at least one file whose sharing times are within a preset quantity interval.

Optionally, in this embodiment of this application, the file selection apparatus may group files according to a preset grouping rule, to obtain at least one file group.

Optionally, the preset grouping rule may include any one of the following:
a preset quantity of files in each file group;
a file type of a file;
a display sequence of a file on a file preview interface;
a storage time of a file; and
a quantity of sharing times of a file.

For example, a file is a picture saved in a graphics library. Assuming that the graphics library includes 480 pictures, the 480 pictures are divided into 12 groups according to a display sequence of the 480 pictures on a graphics library interface, for example, from top to bottom and from left to right, and each group includes 40 pictures.

For example, the display sequence may be alternatively a time sequence of a photographing time of a picture or a time sequence of a storage time of a picture.

It should be noted that, generally, a user takes a plurality of pictures by using an electronic device in a scene, and then needs to select and share the plurality of pictures with a friend. Because the plurality of pictures are generally taken consecutively in a period, the plurality of pictures taken consecutively in a period are displayed on a graphics library interface based on a photographing time sequence. Therefore, pictures taken in different time periods may be divided into a picture group based on a photographing time sequence or a display sequence of the pictures, so that the user can quickly view and select all pictures taken in this time period.

For example, a file is a picture saved in a graphics library. Assuming that the graphics library includes 200 pictures, picture types of the 200 pictures are determined. For example, if 50 pictures in the 200 pictures are of a landscape type, 80 pictures are of a portrait type, 40 pictures are of a food type, and 30 pictures are of a building type, the 200 pictures are divided into four groups based on the types of the 200 pictures, and each group includes pictures of a corresponding type.

It should be noted that in some cases, a user generally needs to select pictures of a specified type. For example, the user needs to select and share all landscape pictures in the graphics library with a friend. Therefore, pictures of a same type may be divided into a same picture group based on types of pictures, so that the user can quickly view and select all pictures of the type.

Optionally, in this embodiment of this application, the file selection apparatus may display at least one file on the file selection interface according to a preset rule.

For example, the file selection apparatus may display at least one file based on a preset row and column layout. For example, a file is a picture. Six pictures are displayed in each row, and a total of eight columns are displayed, so that a user can view 48 pictures on a current display interface.

For example, the file selection apparatus may perform paging display on a file. Each time a page is displayed on the file selection interface, the user may use a switch control to switch a file page that currently needs to be viewed, without performing a slide input for a long time to view another file. For example, if there are a total of 200 pictures in a graphics library, the 200 pictures are divided into five picture pages based on a saving sequence of the 200 pictures, and the latest saved picture, that is, a picture with the latest saving time, is first displayed when being viewed. The user may trigger display of a next picture page by using a control "Next page", and trigger display of a previous picture page by using a control "Previous page", so that the user can conveniently view all pictures in the graphics library through page flipping.

Step 203: In a case that the file selection interface includes a target file group identifier, the file selection apparatus selects a first target file in response to a second input performed by the user on the target file group identifier.

The target file group identifier is used to indicate a target file group, and the target file group includes the first target file.

In this embodiment of this application, the target file group identifier may be one or more of a plurality of file group identifiers.

For example, in the case of entering a group selection mode, an object selection interface includes at least one file group identifier. The object selection apparatus receives the second input performed by the user on the target file group identifier, and selects all or a part of files in the target file group indicated by the target file group identifier.

Optionally, in this embodiment of this application, when the first target file is selected, the file selection apparatus may add an identifier to the target file group identifier in which the first target file is located. For example, a check mark is added to indicate that the first target file is in a selected state, or a color is set in a display region in which the target file group identifier is located, to indicate that the first target file is in a selected state, or a selection box is added around the target file group identifier to indicate that the first target file is in a selected state, which is not limited in this embodiment of this application.

In this embodiment of this application, the second input may be a touch input, a voice input, a gesture input, or another feasible input, which is not limited in this embodiment of this application. For example, the second input may be a tap input, a slide input, or a press input performed by the user. Further, the foregoing tap operation may be any quantity of times of tap operations. The foregoing slide operation may be a slide operation in any direction, such as upward slide, downward slide, left slide, or right slide, which is not limited in this embodiment of this application.

Step 204: In a case that the file selection interface includes at least two files, the file selection apparatus selects a second target file in response to a third input performed by the user.

The at least two files include the second target file.

In this embodiment of this application, the second target file may include all or a part of the at least two files.

For example, in the case of entering a row/column selection mode or a region selection mode, the file selection interface includes at least two files. The file selection apparatus receives the third input performed by the user on the file selection interface, and selects the second target file in the at least two files.

Optionally, in this embodiment of this application, when the second target file is selected, the file selection apparatus may add an identifier to the second target file. For example, a check mark is added to indicate that the second target file is in a selected state, or a color is set in a display region in which the second target file is located, to indicate that the second target file is in a selected state, or a selection box is added around the second target file to indicate that the second target file is in a selected state, which is not limited in this embodiment of this application.

According to the file selection method provided in this embodiment of this application, in a case that a file selection control is displayed, a first input performed by a user on the file selection control is received; a file selection interface indicated by the file selection control is displayed; in a case that the file selection interface includes a target file group identifier, a first target file is selected in response to a second input performed by the user on the target file group identifier, where the target file group identifier is used to indicate a target file group, and the target file group includes the first target file; and in a case that the file selection interface includes at least two files, a second target file is selected in response to a third input performed by the user, where the at least two files include the second target file. In this method, the file selection apparatus displays the corresponding file selection interface based on the first input performed by the user; in a case that the file selection interface includes the target file group identifier, selects the first target file in the target file group based on the second input performed by the user; and in a case that the file selection interface includes at least two files, selects the second target file in the at least two files based on the third input performed by the user, so that the user can quickly select a plurality of required files in the file selection interface based on an actual requirement of the user, thereby improving flexibility of file selection.

It should be noted that in the file selection method provided in this embodiment of this application, the foregoing step 203 and step 204 may be performed alternatively or both.

Optionally, in this embodiment of this application, the file selection interface corresponds to N files.

Optionally, the foregoing step 202 may include the following step 202a:
Step 202a: The file selection apparatus displays the file selection interface corresponding to the file selection control in response to the first input.

The file selection interface includes M file group identifiers, the M file group identifiers indicate M file groups, one of the file groups includes at least two of the N files, and N and M are positive integers.

For example, the file selection apparatus receives the first input performed by the user on a control "Group selection", and displays a group selection interface corresponding to the control "Group selection".

For example, the file group identifier may be a folder identifier, or a thumbnail. For example, the file group identifier may be a thumbnail of the first or last image in the file group.

Optionally, in this embodiment of this application, after the foregoing step 202, the file selection method provided in this embodiment of this application further includes the following step A1:
Step A1: The file selection apparatus receives the second input performed by the user on the target file group identifier in the M file group identifiers.

Optionally, with reference to the foregoing step A1, the selecting a first target file in response to a second input performed by the user on the target file group identifier in the foregoing step 203 may include the following step 203a:
Step 203a: The file selection apparatus selects each file in the target file group in response to the second input performed by the user on the target file group identifier.

Optionally, the target file group identifier may include at least one file group identifier, that is, in a case that the user selects a plurality of file group identifiers, the file selection apparatus may select files in file groups indicated by the plurality of file group identifiers.

Optionally, the second input may be a second input performed by the user on a target region of a target file identifier. For example, the target region is a region in which a first identifier is displayed. For example, the first identifier may be a picture, a text, or a control, which is not limited in this embodiment of this application.

Optionally, the second input may be any feasible input such as a touch input, a voice input, or a gesture input.

For example, the first identifier may be an option box above the target file group, and the first input is a touch input performed by the user on the option box.

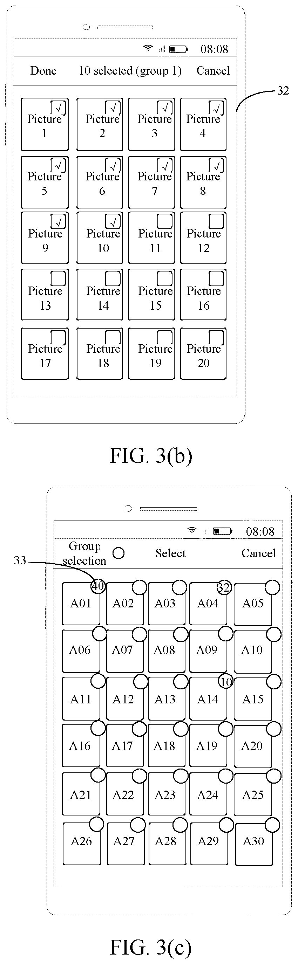

For example, the file selection apparatus may update a display state of the first identifier above the target file group based on a quantity of files selected from the target file group. For example, if 40 pictures are selected from the target file group, "40" is added to the first identifier, so as to prompt the user of the quantity of pictures selected from the picture group. For example, a file is a picture. With reference to FIG. 3(a), after a user taps an option box 33 in an upper right corner of a picture group A01, as shown in FIG. 3(c), the file selection apparatus sets all pictures in the picture group A01 to a selected state, and adds "40" to the option box 33 above the picture group A01, so that the user can visually view pictures selected in the current picture group. In addition, the user may also select pictures in a plurality of picture groups. The user may also select 32 pictures from a group A04 by tapping an identifier of the group A04, and then select 10 pictures from a group A14 by tapping an identifier of the group A14.

In this way, the user may quickly select all pictures in any picture group by using at least one picture group on the file selection interface, and then display a quantity of selected pictures in the group after the selection, thereby improving convenience and flexibility of selecting a picture by the user.

Further, optionally, in this embodiment of this application, the selecting a first target file in response to a second input performed by the user on the target file group identifier in the foregoing step 203 may include the following step 203b1 to step 203b3:
Step 203b1: The file selection apparatus displays a file list in response to the second input performed by the user on the target file group identifier.

The file list includes a file in the target file group.

Step 203b2: The file selection apparatus receives a fourth input performed by the user on the first target file in the file list.

Step 203b3: The file selection apparatus selects the first target file in response to the fourth input.

Optionally, the fourth input may be any feasible input such as a touch input, a voice input, or a gesture input.

For example, the file selection apparatus receives the second input performed by the user on the target file group identifier, and displays the file list on the file selection interface during grouping, where the file list includes at least one file in the target file group. Then, the file selection apparatus receives the fourth input performed by the user on one or more files in the file list, and selects the one or more files.

For example, a file is a picture. As shown in FIG. 3(a), in the case of a group selection mode, a file selection interface 31 includes a total of 30 picture groups from a picture group A01 to a picture group A30. After a user taps the picture group A01, as shown in FIG. 3(b), a group selection interface 32 is displayed, where the group selection interface 32 includes at least a part of pictures in the picture group A01. After the file selection apparatus receives a selection operation performed by the user on an option box of the first 10 pictures in the picture group A01, the first 10 pictures are set to a selected state, "√" is added to the option box of the first 10 pictures, and a current selection state of the user is prompted by displaying "10 selected (group 1)". Further, the user may perform an upward slide operation on the group selection interface 32 to trigger a picture that is not displayed on the group selection interface 32 in the picture group A01 to be displayed on the group selection interface 32.

In this way, the user may tap a picture group to enter a group selection interface of the picture group, and manually select a picture in the group on the group selection interface, thereby improving flexibility of selecting a picture by the user.

Optionally, in this embodiment of this application, the file selection method provided in this embodiment of this application further includes the following step 205 and step 206:
Step 205: The file selection apparatus receives a fifth input performed by the user on the target file group identifier.
Step 206: The file selection apparatus displays a file preview interface in response to the fifth input.

The file preview interface includes thumbnails of at least two files in the target file group.

Optionally, the fifth input may be a touch input, a voice input, a gesture input, or another feasible input, which is not limited in this embodiment of this application. For example, the fifth input is a tap input, a slide input, or a press input performed by the user, which is not limited in this embodiment of this application.

Optionally, the file selection apparatus may display thumbnails of at least two files in the target file group on the file preview interface, or may first generate a corresponding preview image based on thumbnails of at least two files in the target file group, and then display the preview image on the file preview interface. For example, image content of the preview image includes the thumbnails of the at least two files.

For example, the file selection apparatus may generate the foregoing preview image based on a sequence of files in the target file group or a manner of arranging files on a group selection interface corresponding to the target group file. For example, if a picture 1 to a picture 40 are sequentially arranged and displayed in a sequence from left to right and from top to bottom on the group selection interface, the file selection apparatus generates a preview image of a same layout based on a layout of the picture 1 to the picture 40 on the group selection interface, so that arrangement of each picture in a picture group can be restored in the preview image.

For example, in a case that there are a relatively large quantity of files included in the target file group, the file selection apparatus may adjust a file thumbnail of each first file, so that all files can be displayed on the file preview interface without performing a page flipping operation by the user. For example, a file is a picture. In a preview mode, the file selection apparatus recalculates picture sizes of all pictures in the target file group based on a screen proportion, and generates a preview picture that includes picture content of all the pictures based on a picture size of each picture, so that the user can quickly and intuitively preview the picture content of all the pictures in the picture group in a current screen display region.

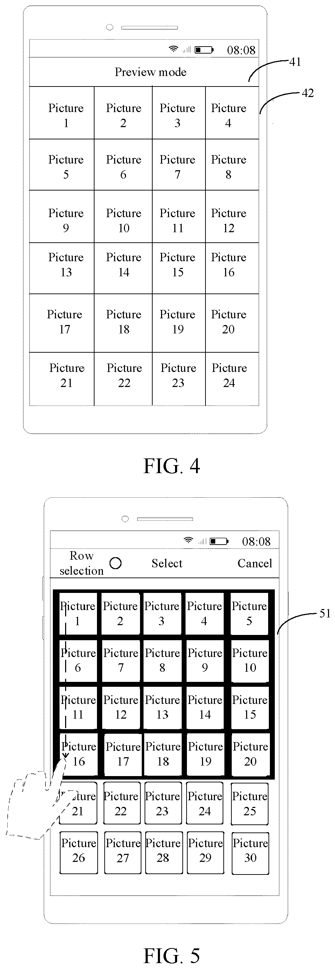

For example, with reference to FIG. 3(a), a user touches and holds the picture group A01 to enter an intra-group picture preview mode. As shown in FIG. 4, the file selection apparatus displays a preview image 42 on a preview interface 41, where the preview image 42 includes all pictures in the picture group A01, that is, image content of a picture 1 to a picture 24. Further, after a finger of the user lifts, the intra-group picture preview mode is exited, and display of the preview interface 41 is canceled.

In this way, when the user wants to search for a picture in a picture group, the user may directly touch and hold the picture group to preview all the pictures in the group, and end the preview by lifting the finger, so that the user can visually view all the pictures in the group by using a preview image, thereby improving flexibility and convenience of searching for a picture by the user.

Optionally, in this embodiment of this application, the file selection interface includes at least two files displayed in at least two rows or at least two columns.

Optionally, after the foregoing step 202, the file selection method provided in this embodiment of this application further includes the following step B1:
Step B1: The file selection apparatus receives the third input performed by the user on the file selection interface.

Optionally, with reference to the foregoing step B1, the selecting a second target file in response to a third input performed by the user in the foregoing step 204 may include the following step 204a:
Step 204a: In response to the third input performed by the user on the file selection interface, in a case that the file selection interface includes at least two files displayed in at least two rows, the file selection apparatus selects at least one row of files corresponding to an input track of the third input, or in a case that the file selection interface includes at least two files displayed in at least two columns, the file selection apparatus selects at least one column of files corresponding to an input track of the third input.

Optionally, the third input may be a slide input performed by the user on the file selection interface.

Optionally, the slide input may be horizontal slide, vertical slide, or oblique slide performed by the user on the file selection interface. For example, the horizontal slide may be slide from left to right or slide from right to left, the vertical slide may be slide from top to bottom or slide from bottom to top, or the oblique slide may be slide from upper left to lower right or may be slide from lower right to upper left, which is not limited in this embodiment of this application.

Optionally, in a case that the file selection interface includes at least two files displayed in at least two rows, the file selection apparatus receives a slide input performed by the user on the file selection interface, and selects at least one row of files between a start position of the slide input and an end position of the slide input on the file selection interface.

For example, in a case that the slide input is vertical slide on the file selection interface, the file selection apparatus may determine positions of one or more rows of first files through which a slide track passes on the file selection interface as target layout positions, and determine the one or more rows of first files as target files.

For example, the first file is a picture. With reference to FIG. 2(b), a user taps an operation option corresponding to "Row selection" in a pull-down menu. As shown in FIG. 5, a row selection mode is entered, and a file selection interface 51 in the row selection mode is displayed. A plurality of pictures (a picture 1 to a picture 30) are arranged and displayed based on a row/column layout on the file selection interface 51, where five pictures are displayed in each row, and a total of six rows are displayed. The user performs downward slide to a position of the picture 19 starting from a position of the picture 1 and then stops the slide, and the file selection apparatus sets one row in which the picture 1 is located, one row in which the picture 6 is located, one row in which the picture 11 is located, and one row in which the picture 16 is located (4 rows in total) to a selected state, where a picture with a black background in FIG. 5 represents a picture in a selected state.

In this way, the user can quickly select consecutive rows on the file selection interface by performing a vertical slide input on the file selection interface, so that the user can conveniently and quickly select a plurality of rows of pictures through one input, thereby improving operation efficiency of the user.

Optionally, in a case that the file selection interface includes at least two files displayed in at least two columns, the file selection apparatus receives a slide input performed by the user on the file selection interface, and selects at least one column of files between a start position of the slide input and an end position of the slide input on the file selection interface.

For example, in a case that the slide input is horizontal slide on the file selection interface, the file selection apparatus may set one or more columns of files through which a slide track passes on the file selection interface to a selected state.

For example, the first file is a picture. With reference to FIG. 2(b), a user taps an operation option corresponding to "Column selection" in a pull-down menu to enter a column selection mode and display a file selection interface in the column selection mode. A plurality of pictures are arranged and displayed based on a row/column layout on the file selection interface, where six pictures are displayed in each column, and a total of five columns are displayed. The user performs rightward slide to a position of the picture 4 starting from a position of the picture 1 and then stops the slide. The file selection apparatus sets one column in which the picture 1 is located, one column in which the picture 2 is located, one column in which the picture 3 is located, and one column in which the picture 4 is located (four columns in total) to a selected state.

In this way, the user can quickly select consecutive columns by performing a horizontal slide input on the file selection interface, so that the user can conveniently and quickly select a plurality of columns of pictures through one input, thereby improving operation efficiency of the user.

For example, in a case that the slide input is oblique slide on the file selection interface, the file selection apparatus may set M rows and N columns of files through which a slide track passes on the file selection interface to a selected state, where M and N are positive integers.

For example, with reference to FIG. 5, if a user performs slide starting from a position of the picture 1 and ending at a position of the picture 8, the picture 1 and the picture 8 through which the slide track passes and the picture 2 and the picture 7 that are adjacent to the slide track are set to a selected state.

In this way, the user can quickly select a plurality of pictures by performing an oblique slide input on the file selection interface based on an actual requirement, so that the user can conveniently and quickly select a plurality of pictures through one input, thereby improving operation efficiency of the user.

Optionally, in this embodiment of this application, the file selection interface includes at least two files.

Optionally, after the foregoing step 202, the file selection method provided in this embodiment of this application may further include the following step C1:
Step C1: The file selection apparatus receives the third input performed by the user on the file selection interface.

Optionally, with reference to the foregoing step C1, the selecting a second target file in response to a third input performed by the user in the foregoing step 204 may include the following step 204b:
Step 204b: The file selection apparatus selects a second target file in a target display region in response to the third input performed by the user on the file selection interface.

The target display region is a region indicated by the third input.

Optionally, the third input may be a slide input performed by the user on the file selection interface.

Optionally, the file selection apparatus receives a slide input performed by the user, and determines the target selection region on the file selection interface based on a slide track of the slide input. For example, the file selection apparatus may determine a display region surrounded by the slide track of the slide input as the target selection region.

Optionally, after receiving a slide input performed by the user on the file selection interface, the file selection apparatus may also determine a region other than a region surrounded by a slide track on the file selection interface as the target selection region.

For example, the user may draw a single graph or a plurality of graphs on the file selection interface through a slide input, that is, the target selection region may be one region corresponding to the single graph, or a plurality of regions corresponding to the plurality of graphs, or a closed graph formed by superimposing or subtracting the plurality of graphs.

It should be noted that the foregoing slide track may also be referred to as an input track.

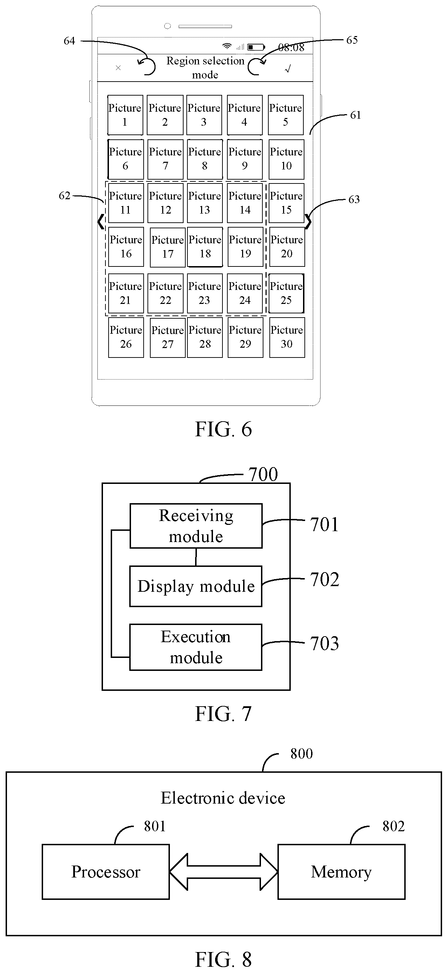

For example, a file is a picture. With reference to FIG. 2(b), a user taps an operation option corresponding to "Region selection" in a pull-down menu. As shown in FIG. 6, a region selection mode is entered, and a file selection interface 61 in the region selection mode is displayed. A plurality of pictures (a picture 1 to a picture 30) are arranged and displayed in a row/column layout on the file selection interface 61. The user performs a slide input on the file selection interface and selects a rectangular region 62 on the file selection interface, and the file selection apparatus sets all pictures in the rectangular region 62 to a selected state.

In this way, the user can select the target selection region by performing a slide input on the file selection interface, and then the file selection apparatus may determine all images in the target selection region selected by the user frame as target files, so that the user can conveniently and quickly select a plurality of pictures through one input, thereby improving operation efficiency of the user.

For example, the file selection apparatus receives a touch input performed by the user on a third control on the file selection interface, and updates display content on the current interface.

For example, with reference to FIG. 6, after a user taps a control 63, the file selection apparatus updates a picture page on a current interface to a next picture page, that is, updates a plurality of currently displayed pictures to a plurality of other pictures in a graphics library, so that the user can select a required picture from the plurality of other pictures.

Optionally, in this embodiment of this application, after the foregoing step 203 or step 204, the file selection method provided in this embodiment of this application further includes the following step D1 to step D4.

Step D1: The file selection apparatus receives a seventh input performed by the user on a first control on the file selection interface.

Step D2: The file selection apparatus deselects the foregoing target file in response to the seventh input.

Step D3: The file selection apparatus receives an eighth input performed by the user on a second control on the file selection interface.

Step D4: The file selection apparatus reselects the first target file in response to the eighth input.

For example, the fourth control may be a character, or a pattern, which is not limited in this embodiment of this application.

For example, the seventh input and the eighth input may be any feasible input such as a tap input, a slide input, or a press input, which is not limited in this embodiment of this application.

For example, after the foregoing target file is deselected, if the user wants to restore selecting the foregoing target file, the file selection apparatus receives the input performed by the user on the second control, and reselects the foregoing target file.

For example, with reference to FIG. 6, the file selection interface 61 includes a cancel control 64 and a restore control 65. A user performs a slide input on the file selection interface, and selects a rectangle region 62 on the file selection interface. In a case that the file selection apparatus sets all pictures in the rectangle region 62 to a selected state, the user taps the control 64 to cancel a previous selection operation, that is, deselect all pictures in the rectangle region 72, and the user may reselect pictures. In addition, the user may tap the restore control 65, to return to a state before the cancellation, that is, re-set all pictures in the rectangle region 62 to a selected state. Further, the user may tap "×" on the interface 61 to deselect a picture, or tap "√" on the interface 61 to confirm a currently selected picture.

In this way, the user may cancel a picture selection operation or restore a picture selection operation by performing an operation on a control on the file selection interface, so as to provide sufficient error tolerance space for the user to select a picture, thereby facilitating the user to reselect a picture and improving flexibility of selecting a picture by the user.

The file selection method provided in the embodiments of this application may be executed by a file selection apparatus. In the embodiments of this application, an example in which the file selection apparatus executes the file selection method is used to describe the file selection apparatus provided in the embodiments of this application.

FIG. 7 is a file selection apparatus 700 according to an embodiment of this application. The apparatus includes a receiving module 701, a display module 702, and an execution module 703. The receiving module 701 is configured to: in a case that a file selection control is displayed, receive a first input performed by a user on the file selection control. The display module 702 is configured to display a file selection interface corresponding to the file selection control in response to the first input received by the receiving module 701. The execution module 703 is configured to: in a case that the file selection interface includes a target file group identifier, select a first target file in response to a second input performed by the user on the target file group identifier, where the target file group identifier is used to indicate a target file group, and the target file group includes the first target file. The execution module 703 is configured to: in a case that the file selection interface includes at least two files, select a second target file in response to a third input performed by the user, where the at least two files include the second target file.

Optionally, in this embodiment of this application, the file selection interface corresponds to N files.

The display module is specifically configured to display the file selection interface corresponding to the file selection control in response to the first input received by the receiving module, where the file selection interface includes M file group identifiers, the M file group identifiers indicate M file groups, one of the file groups includes at least two of the N files, and N and M are positive integers.

Optionally, in this embodiment of this application, the receiving module is further configured to: after the file selection interface corresponding to the file selection control is displayed, receive the second input performed by the user on the target file group identifier in the M file group identifiers.

The execution module is specifically configured to select each file in the target file group in response to the second input that is performed by the user on the target file group identifier and that is received by the receiving module.

Optionally, in this embodiment of this application, the display module is further configured to display a file list in response to the second input performed by the user on the target file group identifier, where the file list includes a file in the target file group.

The receiving module is further configured to receive a fourth input performed by the user on the first target file in the file list.

The execution module is specifically configured to select the first target file in response to the fourth input received by the receiving module.

Optionally, in this embodiment of this application, the receiving module is further configured to receive a fifth input performed by the user on the target file group identifier. The display module is further configured to display a file preview interface in response to the fifth input received by the receiving module, where the file preview interface includes thumbnails of at least two files in the target file group.

Optionally, in this embodiment of this application, the file selection interface includes at least two files displayed in at least two rows or at least two columns.

The receiving module is further configured to: after the file selection interface corresponding to the file selection control is displayed, receive the third input performed by the user on the file selection interface. The execution module is specifically configured to: in response to the third input that is performed by the user on the file selection interface and that is received by the receiving module, in a case that the file selection interface includes at least two files displayed in at least two rows, select at least one row of files corresponding to an input track of the third input, or in a case that the file selection interface includes at least two files displayed in at least two columns, select at least one column of files corresponding to an input track of the third input.

Optionally, in this embodiment of this application, the file selection interface includes at least two files.

The receiving module is further configured to receive the third input performed by the user on the file selection interface.

The execution module is specifically configured to select a second target file in a target display region in response to the third input performed by the user on the file selection interface, where the target display region is a region indicated by the third input.

Optionally, in this embodiment of this application, the receiving module is further configured to receive a seventh input performed by the user on a first control on the file selection interface. The execution module is further configured to deselect the first target file in response to the seventh input received by the receiving module. The receiving module is further configured to receive an eighth input performed by the user on a second control on the file selection interface. The execution module is configured to reselect the first target file in response to the eighth input received by the receiving module.

According to the file selection apparatus provided in this embodiment of this application, in a case that a file selection control is displayed, a first input performed by a user on the file selection control is received; a file selection interface indicated by the file selection control is displayed; in a case that the file selection interface includes a target file group identifier, a first target file is selected in response to a second input performed by the user on the target file group identifier, where the target file group identifier is used to indicate a target file group, and the target file group includes the first target file; and in a case that the file selection interface includes at least two files, a second target file is selected in response to a third input performed by the user, where the at least two files include the second target file. In this method, the file selection apparatus displays the corresponding file selection interface based on the first input performed by the user; in a case that the file selection interface includes the target file group identifier, selects the first target file in the target file group based on the second input performed by the user; and in a case that the file selection interface includes at least two files, selects the second target file in the at least two files based on the third input performed by the user, so that the user can quickly select a plurality of required files in the file selection interface based on an actual requirement of the user, thereby improving flexibility of file selection.

The file selection apparatus in this embodiment of this application may be an electronic device, or may be a component in the electronic device, such as an integrated circuit or a chip. The electronic device may be a terminal, or a device other than the terminal. For example, the electronic device may be a mobile phone, a tablet computer, a notebook computer, a palmtop computer, an in-vehicle electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or the like, or may be a server, a network attached storage (Network Attached Storage, NAS), a personal computer (personal computer, PC), a television (television, TV), a teller machine, or a self-service computer. This is not specifically limited in this embodiment of this application.

The file selection apparatus in this embodiment of this application may be an apparatus with an operating system. The operating system may be an Android (Android) operating system, an iOS operating system, or another possible operating system. This is not specifically limited in this embodiment of this application.

The file selection apparatus provided in this embodiment of this application can implement the processes implemented in the method embodiments in FIG. 1 to FIG. 6. To avoid repetition, details are not described herein again.

Optionally, as shown in FIG. 8, an embodiment of this application further provides an electronic device 800, including a processor 801 and a memory 802. The memory 802 stores a program or an instruction executable on the processor 801, and the program or the instruction is executed by the processor 801 to implement the steps of the foregoing file selection method embodiment, and a same technical effect can be achieved. To avoid repetition, details are not described herein again.

It should be noted that the electronic device in this embodiment of this application includes the mobile electronic device and the non-mobile electronic device.

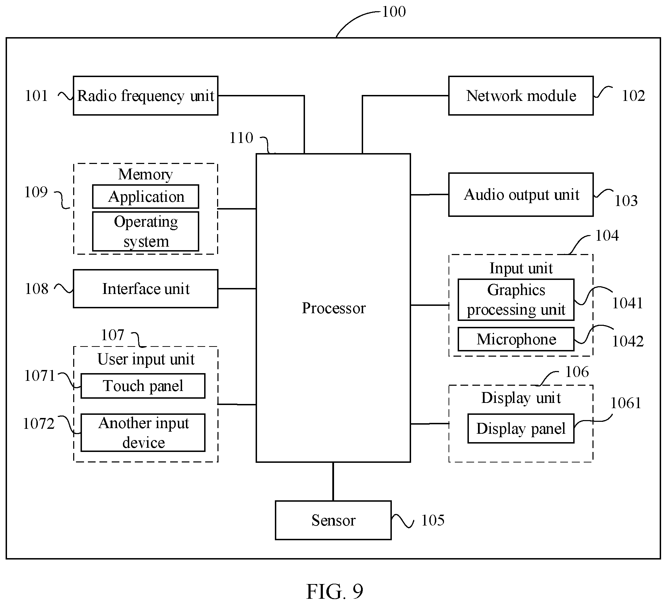

FIG. 9 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the electronic device 100 may further include the power supply (for example, a battery) that supplies power to each component. The power supply may be logically connected to the processor 110 by using a power supply management system, so as to manage functions such as charging, discharging, and power consumption by using the power supply management system. The structure of the electronic device shown in FIG. 9 does not constitute a limitation on the electronic device, and the electronic device may include more or fewer components than those shown in the figure, or combine some components, or have different component arrangements. Details are not described herein again.

The user input unit 107 is configured to: in a case that a file selection control is displayed, receive a first input performed by a user on the file selection control. The display unit 106 is configured to display a file selection interface corresponding to the file selection control in response to the first input received by the user input unit 107. The processor 110 is configured to: in a case that the file selection interface includes a target file group identifier, select a first target file in response to a second input performed by the user on the target file group identifier, where the target file group identifier is used to indicate a target file group, and the target file group includes the first target file. The processor 110 is configured to: in a case that the file selection interface includes at least two files, select a second target file in response to a third input performed by the user, where the at least two files include the second target file.

Optionally, in this embodiment of this application, the file selection interface corresponds to N files. The display unit 106 is specifically configured to display the file selection interface corresponding to the file selection control in response to the first input received by the user input unit 107, where the file selection interface includes M file group identifiers, the M file group identifiers indicate M file groups, one of the file groups includes at least two of the N files, and N and M are positive integers.

Optionally, in this embodiment of this application, the user input unit 107 is further configured to: after the file selection interface corresponding to the file selection control is displayed, receive the second input performed by the user on the target file group identifier in the M file group identifiers. The processor 110 is specifically configured to select each file in the target file group in response to the second input that is performed by the user on the target file group identifier and that is received by the user input unit.

Optionally, in this embodiment of this application, the display module 106 is further configured to display a file list in response to the second input performed by the user on the target file group identifier, where the file list includes a file in the target file group. The user input unit 107 is further configured to receive a fourth input performed by the user on the first target file in the file list. The processor 110 is specifically configured to select the first target file in response to the fourth input received by the user input unit 107.

Optionally, in this embodiment of this application, the user input unit 107 is further configured to receive a fifth input performed by the user on the target file group identifier. The display unit 106 is further configured to display a file preview interface in response to the fifth input received by the user input unit 107, where the file preview interface includes thumbnails of at least two files in the target file group.

Optionally, in this embodiment of this application, the file selection interface includes at least two files displayed in at least two rows or at least two columns.

The user input unit 107 is further configured to: after the file selection interface corresponding to the file selection control is displayed, receive the third input performed by the user on the file selection interface. The processor 110 is specifically configured to: in response to the third input that is performed by the user on the file selection interface and that is received by the user input unit 107, in a case that the file selection interface includes at least two files displayed in at least two rows, select at least one row of files corresponding to an input track of the third input, or in a case that the file selection interface includes at least two files displayed in at least two columns, select at least one column of files corresponding to an input track of the third input.

Optionally, in this embodiment of this application, the file selection interface includes at least two files. The user input unit 107 is further configured to receive the third input performed by the user on the file selection interface. The processor 110 is specifically configured to select a second target file in a target display region in response to the third input performed by the user on the file selection interface, where the target display region is a region indicated by the third input.

Optionally, in this embodiment of this application, the user input unit 107 is further configured to receive a seventh input performed by the user on a first control on the file selection interface. The processor 110 is further configured to deselect the first target file in response to the seventh input received by the user input unit 107. The user input unit 107 is further configured to receive an eighth input performed by the user on a second control on the file selection interface. The processor 110 is configured to reselect the first target file in response to the eighth input received by the user input unit 107.

According to the electronic device provided in this embodiment of this application, in a case that a file selection control is displayed, a first input performed by a user on the file selection control is received; a file selection interface indicated by the file selection control is displayed; in a case that the file selection interface includes a target file group identifier, a first target file is selected in response to a second input performed by the user on the target file group identifier, where the target file group identifier is used to indicate a target file group, and the target file group includes the first target file; and in a case that the file selection interface includes at least two files, a second target file is selected in response to a third input performed by the user, where the at least two files include the second target file. In this method, the electronic device displays the corresponding file selection interface based on the first input performed by the user; in a case that the file selection interface includes the target file group identifier, selects the first target file in the target file group based on the second input performed by the user; and in a case that the file selection interface includes at least two files, selects the second target file in the at least two files based on the third input performed by the user, so that the user can quickly select a plurality of required files in the file selection interface based on an actual requirement of the user, thereby improving flexibility of file selection.

It should be understood that, in this embodiment of this application, the input unit 104 may include a graphics processing unit (Graphics Processing Unit, GPU) 1041 and a microphone 1042, and the graphics processing unit 1041 processes image data of a still image or a video that is obtained by an image capturing apparatus (for example, a camera) in a video capturing mode or an image capturing mode. The display unit 106 may include a display panel 1061. The display panel 1061 may be configured in a form such as a liquid crystal display or an organic light-emitting diode. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

The memory 109 may be configured to store a software program and various data. The memory 109 may mainly include a first storage region for storing a program or an instruction and a second storage region for storing data. The first storage region may store an operating system, and an application or an instruction required by at least one function (for example, a sound playing function or an image playing function). In addition, the memory 109 may be a volatile memory or a non-volatile memory, or the memory 109 may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 109 in this embodiment of this application includes but is not limited to these memories and a memory of any other proper type.

The processor 110 may include one or more processing units. Optionally, an application processor and a modem processor are integrated into the processor 110. The application processor mainly processes an operating system, a user interface, an application, and the like. The modem processor mainly processes a wireless communication signal, for example, a baseband processor. It can be understood that, alternatively, the modem processor may not be integrated into the processor 110.

An embodiment of this application further provides a readable storage medium. The readable storage medium stores a program or an instruction, and the program or the instruction is executed by a processor to implement the processes of the foregoing file selection method embodiment, and a same technical effect can be achieved. To avoid repetition, details are not described herein again.

The processor is a processor in the electronic device in the foregoing embodiment. The readable storage medium includes a computer readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing file selection method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application provides a computer program product. The program product is stored in a storage medium. The program product is executed by at least one processor to implement the processes of the foregoing file selection method embodiment, and a same technical effect can be achieved. To avoid repetition, details are not described herein again.

It should be noted that, in this specification, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are merely illustrative but not restrictive. Under the enlightenment of this application, a person of ordinary skill in the art can make many forms without departing from the purpose of this application and the protection scope of the claims, all of which fall within the protection of this application.

## Claims

1. A file selection method, wherein the method comprises:
in a case that a file selection control is displayed, receiving a first input performed by a user on the file selection control;
displaying a file selection interface corresponding to the file selection control in response to the first input;
in a case that the file selection interface comprises a target file group identifier, selecting a first target file in response to a second input performed by the user on the target file group identifier, wherein the target file group identifier is used to indicate a target file group, and the target file group comprises the first target file; and
in a case that the file selection interface comprises at least two files, selecting a second target file in response to a third input performed by the user, wherein the at least two files comprise the second target file.

2. The method according to claim 1, wherein the file selection interface corresponds to N files, and the displaying a file selection interface corresponding to the file selection control in response to the first input comprises:
displaying the file selection interface corresponding to the file selection control in response to the first input, wherein the file selection interface comprises M file group identifiers, the M file group identifiers indicate M file groups, one of the file groups comprises at least two of the N files, and N and M are positive integers.

3. The method according to claim 2, wherein after the displaying a file selection interface corresponding to the file selection control in response to the first input, the method further comprises:
receiving the second input performed by the user on the target file group identifier in the M file group identifiers; and
the selecting a first target file in response to a second input performed by the user on the target file group identifier comprises:
selecting each file in the target file group in response to the second input performed by the user on the target file group identifier.

4. The method according to claim 2, wherein the selecting a first target file in response to a second input performed by the user on the target file group identifier comprises:
displaying a file list in response to the second input performed by the user on the target file group identifier, wherein the file list comprises a file in the target file group;
receiving a fourth input performed by the user on the first target file in the file list; and
selecting the first target file in response to the fourth input.

5. The method according to any one of claims 2 to 4, wherein the method further comprises:
receiving a fifth input performed by the user on the target file group identifier; and
displaying a file preview interface in response to the fifth input, wherein the file preview interface comprises thumbnails of at least two files in the target file group.

6. The method according to claim 1, wherein the file selection interface comprises at least two files displayed in at least two rows or at least two columns; and
after the displaying a file selection interface corresponding to the file selection control in response to the first input, the method further comprises:
receiving the third input performed by the user on the file selection interface; and
the selecting a second target file in response to a third input performed by the user comprises:
in response to the third input performed by the user on the file selection interface, in a case that the file selection interface comprises at least two files displayed in at least two rows, selecting at least one row of files corresponding to an input track of the third input, or in a case that the file selection interface comprises at least two files displayed in at least two columns, selecting at least one column of files corresponding to an input track of the third input.

7. The method according to claim 1, wherein the file selection interface comprises at least two files; and
after the displaying a file selection interface corresponding to the file selection control in response to the first input, the method further comprises:
receiving the third input performed by the user on the file selection interface; and
the selecting a second target file in response to a third input performed by the user comprises:
selecting a second target file in a target display region in response to the third input performed by the user on the file selection interface, wherein the target display region is a region indicated by the third input.

8. The method according to claim 1, wherein after the selecting a first target file, the method further comprises:
receiving a seventh input performed by the user on a first control on the file selection interface;
deselecting the first target file in response to the seventh input;
receiving an eighth input performed by the user on a second control on the file selection interface; and
reselecting the first target file in response to the eighth input.

9. A file selection apparatus, wherein the apparatus comprises a receiving module, a display module, and an execution module, wherein
the receiving module is configured to: in a case that a file selection control is displayed, receive a first input performed by a user on the file selection control;
the display module is configured to display a file selection interface corresponding to the file selection control in response to the first input received by the receiving module;
the execution module is configured to: in a case that the file selection interface comprises a target file group identifier, select a first target file in response to a second input performed by the user on the target file group identifier, wherein the target file group identifier is used to indicate a target file group, and the target file group comprises the first target file; and
the execution module is configured to: in a case that the file selection interface comprises at least two files, select a second target file in response to a third input performed by the user, wherein the at least two files comprise the second target file.

10. The apparatus according to claim 9, wherein the file selection interface corresponds to N files; and
the display module is specifically configured to display the file selection interface corresponding to the file selection control in response to the first input received by the receiving module, wherein the file selection interface comprises M file group identifiers, the M file group identifiers indicate M file groups, one of the file groups comprises at least two of the N files, and N and M are positive integers.

11. The apparatus according to claim 9, wherein the file selection interface comprises at least two files displayed in at least two rows or at least two columns;
the receiving module is further configured to: after the file selection interface corresponding to the file selection control is displayed, receive the third input performed by the user on the file selection interface; and
the execution module is specifically configured to: in response to the third input that is performed by the user on the file selection interface and that is received by the receiving module, in a case that the file selection interface comprises at least two files displayed in at least two rows, select at least one row of files corresponding to an input track of the third input, or in a case that the file selection interface comprises at least two files displayed in at least two columns, select at least one column of files corresponding to an input track of the third input.

12. The apparatus according to claim 9, wherein the file selection interface comprises at least two files;
the receiving module is further configured to receive the third input performed by the user on the file selection interface; and
the execution module is specifically configured to select a second target file in a target display region in response to the third input performed by the user on the file selection interface, wherein the target display region is a region indicated by the third input.

13. An electronic device, comprising a processor and a memory, wherein the memory stores a program or an instruction executable on the processor, and the program or the instruction is executed by the processor to implement the steps of the file selection method according to any one of claims 1 to 8.

14. A readable storage medium, wherein the readable storage medium stores a program or an instruction, and the program or the instruction is executed by a processor to implement the steps of the file selection method according to any one of claims 1 to 8.

15. A computer program product, wherein the program product is executed by at least one processor to implement the file selection method according to any one of claims 1 to 8.

16. A chip, wherein the chip comprises a processor and a communication interface, the communication interface is coupled to the processor, and the processor is configured to run a program or an instruction to implement the file selection method according to any one of claims 1 to 8.
